# EUROPEAN PATENT SPECIFICATION

(11) **EP 3 767 259 B1**
(45) Date of publication and mention of the grant of the patent: **20.09.2023**
(21) Application number: 20185724.0
(22) Date of filing: 14.07.2020
(51) Int. Cl.: G01J 5/02, G01J 5/08, G01J 5/05, G01J 5/07

(54) **SENSOR OR DETECTOR DEVICE**
SENSOR ODER DETEKTORVORRICHTUNG
DISPOSITIF DE CAPTEUR OU DE DÉTECTEUR

(30) Priority: 16.07.2019 BE 201905457
(43) Date of publication of application: 20.01.2021
(73) Proprietor: Niko NV, 9100 Sint-Niklaas (BE)
(72) Inventor: COOREMAN, Tom, 9310 Meldert (Aalst) (BE)
(74) Representative: Winger

(56) References cited:
- EP-A2- 2 533 026
- US-A- 4 459 484
- US-A1- 2016 334 279
- US-B1- 6 222 191

## Description

### Technical field of the invention

The present invention relates to a sensor or detector device. More particularly, the present invention relates to a flat lens sensor or detector device with improved resistance against impact of external objects.

### Background of the invention

Sensors or detector devices comprise a housing to accommodate the sensor or detector elements in such a way to protect these elements from environmental mediums like water or dust. Such sensor or detector devices, and then especially sensors or detectors that are intended for outdoor applications, need to comply with certain standards and tests, such as IP 54 standard and 0.3 joule resistance test. IP stands for Ingress Protection or International Protection rating and is used to define the sealing effectiveness of housings or enclosures against intrusion of foreign elements such as dirt and water. For outdoor devices, the sensor or detector device should still comply with the IP 54 norm after being impacted with 0.3 joule from a height of 150 mm.

The lens of the sensor or detector devices may not be able to meet the requirements of the desired impact test standard. Particularly, sensor or detector devices comprising a flat lens may fail to survive the 0.3 joule resistance test. The flat lens may burst or even break when impacted by an object, thereby rendering the sensor or detector device unfit for use outdoor as they are no longer water and dust resistant and thus no longer comply with the IP54 standard. Hence, there remains a need for a sensor or detector device, and especially for a sensor or detector device having a flat lens, that complies with the IP 54 norm and 0.3 joule resistance test for outdoor applications.

US 2016/0334279 describes a thermal-isolation assembly comprising a cosmetic grille (front housing), an enclosure (back housing), and a lens/button. The lens/button may function as a lens for use by a sensor. Additionally the lens/button may be actuated by a user by pushing the lens/button. Such actuation may serve as user input to the device. The assembly further comprises a button support to support the lens/button and allows the lens/button to be actuated by a user. A button flexure serves to allow a near-constant pressure to be placed by a user on various locations on the lens/button to cause actuation. The assembly further comprises a gasket to isolate the sensor and/or other temperature-sensitive components from heat energy emitted from LEDs and/or other heat-emitting components. The gasket may also help isolate the sensor from dust, bugs and other matter that may affect performance.

US 6 222 191 describes an occupancy based load controller comprising at least one occupancy sensor, including at least one passive infrared sensor; a passive infrared lens operable to focus infrared energy from a plurality of directions toward said passive infrared sensor; a passive infrared mask operable to block infrared radiation from selected directions; a sensor case assembly enclosing said occupancy sensors; a passive infrared retaining ring removably engaging said passive infrared lens and passive infrared mask to said sensor case assembly; and wherein said mask is operable to rotate within and relative to said sensor case assembly to adjust the spatial sensitivity of said sensor.

### Summary of the invention

It is an object of embodiments of the present invention to provide a sensor or detector device with improved resistance against impact of external objects and thus with an improved protection against fluids and dust.

The above objective is accomplished by a device according to claim 1. Favourable modifications are defined in the dependent claims.

The present invention provides a sensor or detector device for detecting movement and/or for determining presence of one or more persons in- or outside a building. The sensor or detector device comprises a housing assembly. The housing assembly comprises a flat lens and a front housing comprising a wall defining an opening, the front housing further being adapted for removably receiving the flat lens. The housing assembly further comprises a back housing adapted for removably being attached to the front housing. The front housing further comprises a reinforcement structure for protecting the flat lens from being damaged. The reinforcement structure is attached to an inner periphery of the wall of the front housing. The reinforcement structure and the flat lens are attached to the front housing such that the reinforcement structure abuts with the inner surface of the flat lens. The reinforcement structure is formed integral with the front housing.

An advantage of a sensor or detector device according to embodiments of the invention is that, because of the reinforcement structure, the flat lens of the sensor or detector device is better protected and has a higher resistance against impact of external objects onto the device. As a consequence, the sensor or detector device will also be better protected against fluids, e.g. water, and dust, as it will not burst or break as a result of impact of an object.

Because of the above, the present invention is particularly useful for outdoor sensor and detector devices. However, a sensor or detector device according to embodiments of the invention may also be suitable for indoor use.

According to the invention, the sensor or detector device may be any suitable sensor or detector device for detecting movement and/or determining the presence of one or more persons in- or outside a building.

The front housing and the back housing may, when removably attached to each other, be adapted to receive a printed circuit board of the sensor or detector device.

According to embodiments of the invention, the reinforcement structure may comprises an annular ring having a diameter greater than or equal to a diameter of a central zone of the flat lens and one or more ribs connecting or attaching the annular ring to the wall of the front housing.

According to other embodiments, the reinforcement structure may comprise one rib diametrically extending across the opening of the front housing, and a first end and a second end the rib may be attached to opposite sides of the wall of the front housing.

According to other embodiments, the reinforcement structure may comprise a pair of arms, and each of the pair of arms may be attached to the wall of the front housing at opposite sides of the wall, or in other words, diametrically opposite to each other. Each arm of the pair of arms may have a length such that they define an opening in between their ends facing each other, i.e. away from the ends that are attached to the wall of the front housing, the opening being bigger than the central zone of the flat lens.

### Brief description of the drawings

It has to be noted that same reference signs in the different figures refer to same, similar or analogous elements.
FIG. 1 illustrates an exploded view of an sensor or detector device, according to an embodiment of the present invention;
FIG. 2 illustrates a perspective view of a front housing having a reinforcement structure and a flat lens of the sensor or detector device of FIG. 1, according to an embodiment of the present invention;
FIG. 3A illustrates a perspective view of the front housing having a reinforcement structure, according to another embodiment of the present invention;
FIG. 3B illustrates a perspective view of the front housing having a reinforcement structure, according to yet another embodiment of the present invention;
FIG. 4 illustrates an exploded view of the sensor or detector device having a reinforcement structure, according to an example not falling under the claims;
FIG. 5 illustrates a sectional view of the reinforcement structure taken along a line A-A' of FIG. 4;
FIG. 6A illustrates a perspective view of a reinforcement structure for the sensor or detector device of FIG. 4;
FIG. 6B illustrates a perspective view of a reinforcement structure for the sensor or detector device of FIG. 4.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes. The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also comprises indirect contact between part A and part B, in other words also comprises the case where intermediate parts are present in between part A and part B.

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims. No element, act, or instruction used herein should be construed as critical or essential unless explicitly described as such. Also, as used herein, the articles "a" and "an" are intended to comprise one or more items and may be used interchangeably with "one or more".

The present invention provides a sensor or detector device for detecting movement/motion and/or for determining the presence of one or more persons in- or outside a building. The sensor or detector device comprises a housing assembly. The housing assembly comprises a flat lens and a front housing comprising a wall defining an opening, the front housing further being adapted for removably receiving the flat lens. The housing assembly further comprises a back housing adapted for removably being attached to the front housing. The front housing further comprises a reinforcement structure for protecting the flat lens from being damaged. The reinforcement structure is attached to an inner periphery of the wall of the front housing. The reinforcement structure and the flat lens are attached to the front housing such that the reinforcement structure abuts with the inner surface of the flat lens.

An advantage of a sensor or detector device according to embodiments of the invention is that, because of the reinforcement structure, the flat lens of the sensor or detector device is better protected and has a higher resistance against impact of external objects onto the device. As a consequence, the sensor or detector device will also be better protected against fluids, e.g. water, and dust, as it will not burst or break as a result of impact of an object.

Because of the above, the present invention is particularly useful for outdoor sensor and detector devices. However, a sensor or detector device according to embodiments of the invention may also be suitable for indoor use.

According to embodiments of the invention, the sensor or detector device may be any suitable sensor or detector device for detecting movement/motion and/or for determining the presence of one or more persons in- or outside a building.

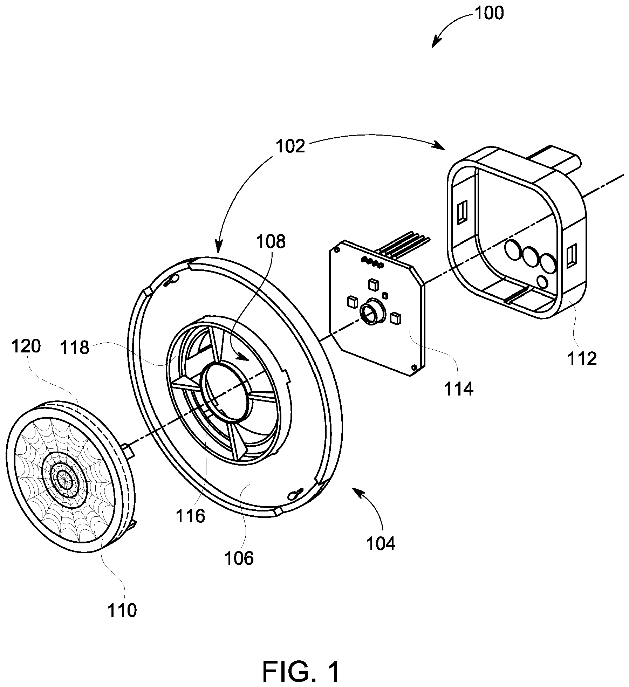

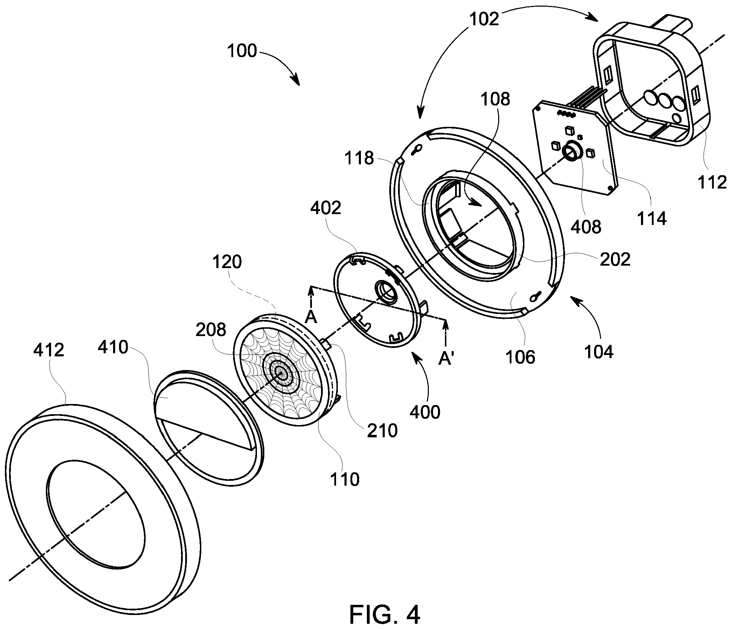

FIG. 1 illustrates an exploded view of an sensor or detector device 100, according to an embodiment of the present invention. According to embodiments of the invention, the sensor or detector device may be any suitable sensor or detector device for detecting movement/motion and/or for determining the presence of one or more persons in- or outside a building. The sensor or detector device 100 disclosed in the present invention may, for example, be a passive infrared (PIR) sensor. However, it may be appreciated by a person skilled in the art that the sensor or detector device 100 may be any type of sensor or detector known by a person skilled in the art and that may be used for outdoor and indoor applications. The sensor or detector device 100 comprises a housing assembly 102 to accommodate various components including, but not limited to, a printed circuit board (PCB) 114, a passive infrared (PIR) element (shown in FIG. 4) and a flat lens 110. The housing assembly 102 comprises a front housing 104 having a wall 106 defining an opening 108. The front housing 104 is adapted to removably receive the flat lens 110 thereon.

The housing assembly 102 further comprises a back housing 112 removably attached to the front housing 104. The front housing 104 and the back housing 112 are together adapted to receive the printed circuit board (PCB) 114 therebetween.

The front housing 104 further comprises a reinforcement structure 116 attached to an inner periphery 118 of the wall 106 of the front housing 104. At least a portion of the reinforcement structure 116 is adapted to abut with an inner surface 120 of the flat lens 110. Specifically, the reinforcement structure 116 and the flat lens 110 are attached to the front housing 104 in such a way that, in the assembled condition, the reinforcement structure 116 abuts with the inner surface 120 of the flat lens 110. As such, the reinforcement structure 116 protects the flat lens 110 from any damage if the sensor or detector device 100 is, for example, subjected to an impact load by a foreign object.

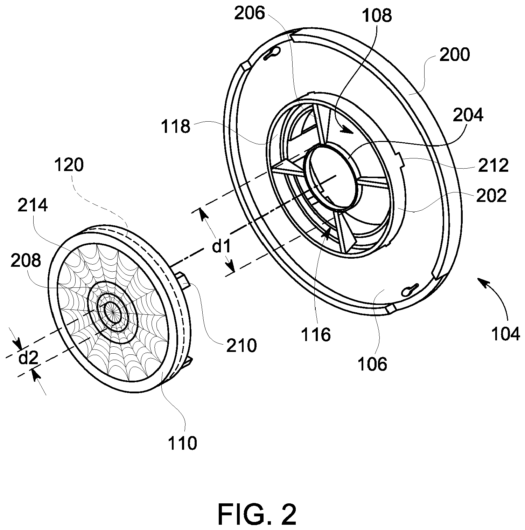

FIG. 2 illustrates a perspective view of the front housing 104 comprising the reinforcement structure 116 and the flat lens 110 of the sensor or detector device 100, according to an embodiment of the present invention. The front housing 104 may, according to the present example, have a cylindrical body, formed by the wall 106. The front housing 104 further comprises an outer flange 200 and an inner flange 202, both extending vertically from the inner periphery 118 of the wall 106. The reinforcement structure 116 may, according to the present example, be attached to the inner flange 202 of the front housing 104. The reinforcement structure 116 may comprise an annular ring 204 and one or more ribs 206. The annular ring 204 is attached to the wall 106 of the front housing 104 by the one or more ribs 206. In one example, the reinforcement structure 116 may comprise one rib 202 for attaching the annular ring 204 to the inner flange 202 of the front housing 104. In another example, the reinforcement structure 116 may comprise multiple ribs 206 for attaching the annular ring 204 to the inner flange 202. The reinforcement structure 116 may, according to the example illustrated in Fig. 2, comprise multiple ribs 206, i.e. four ribs, for attaching the annular ring 204 with the inner flange 202. Each of the multiple ribs 206 comprises a first end attached to the annular ring 204 and a second attached to the inner flange 202. The ribs 206 may have a triangular shape. This may add strength to the reinforcement structure 116. The annular ring 204 may preferably have a diameter 'd1' that is bigger than or equal to a diameter 'd2' of a central zone 208 of the flat lens 110. In the assembled condition, the annular ring 204 of the reinforcement structure 116 may preferably coincide with an outer edge of the central zone 208 of the flat lens 110 and abuts with the inner surface 120 of the flat lens 110 to prevent any damage caused by an impact load of an external object. The annular ring 204 may be designed corresponding to a size and a shape of the flat lens 110, precisely based on the central zone 208, to avoid overlapping with the central zone 208 of the flat lens 110. Hence the sensitivity of the sensor or detector device 100 is unaffected by the reinforcement structure 116.

The flat lens 110 may comprise one or more protrusions 210 adapted to fit into one or more recesses 212 provided in the inner flange 202 of the front housing 104. It may be understood by a person skilled in that art that the protrusions 210 may be fitted with the inner flange 202 of the front housing 104 using any known fitting method, so that the flat lens 110 may be detached from the front housing 104 easily. According to embodiments of the invention, the one or more ribs 206 may be tilted to coincide with the orientation of one or more extensions flat lens lines 214 of the flat lens 110 to avoid loss of sensitivity of the sensor or detector device 100. Such alignment of the ribs 206 and the flat lens lines 114 will allow infrared rays to pass through the flat lens 110 without any obstruction. Further, a top edge of each of the multiple ribs 206 abuts with the inner surface 120 of the flat lens 110.

According to embodiments of the invention, the reinforcement structure 116 may be integrally formed with the front housing 104. More specifically according to such embodiments, the front housing 104 and the reinforcement structure 116 with the annular ring 204 and the multiple ribs 206 are formed as one piece from a same material during the manufacturing process. According to embodiments of the invention, the front housing 104 and the reinforcement structure 116 may, for example, be manufactured through a molding process.

According to other embodiments, the reinforcement structure 116 having the annular ring 204 and the multiple ribs 206 may be an individual component separate from the front housing 104. According to such embodiments, the reinforcement structure may be removably attached to the inner flange 202 of the front housing 104. Various known fitting method may be implemented to removably fix the reinforcement structure 116 to the front housing 104. Further, the reinforcement structure 116 may be easily retrofitted with the front housing 104 without any alterations in the inner flange 202 of the front housing 104.

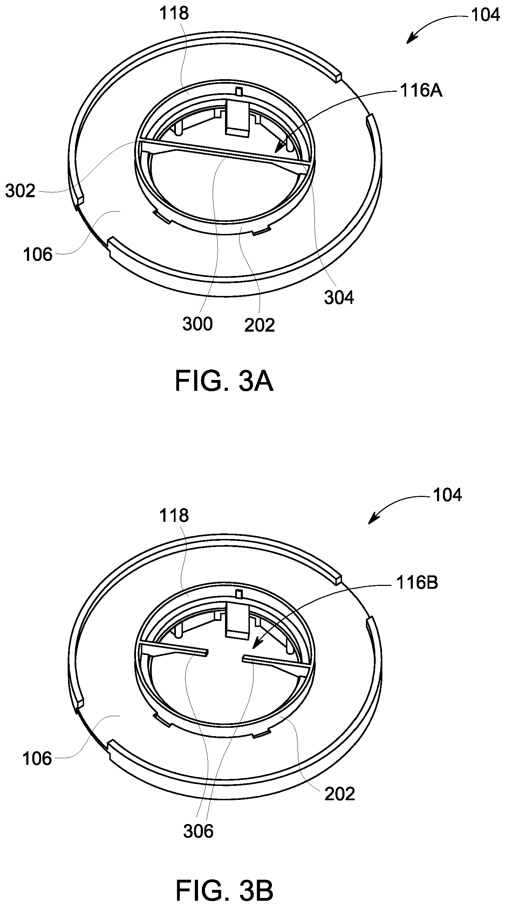

FIG. 3A illustrates a perspective view of the front housing 104 having a reinforcement structure 116A, according to another embodiment of the present invention. The reinforcement structure 116A may, according to this embodiment, comprise an extension member 300 diametrically extending across the opening 108 of the front housing 104. The extension member 300 comprises a first end 302 and a second end 304, both ends being attached to the wall 106 of the front housing 104. The first end 302 and the second end 304 are attached to the inner flange 202 of the front housing 104.

The extension member 300 of the reinforcement structure 116A is attached to the inner flange 202 in such a way that top edge of the extension member 300 abuts with the inner surface 120 of the flat lens 110. As such, the reinforcement structure 116A prevents damage of the flat lens 110 that may be caused by an impact load of an external object. The reinforcement structure 116A may be manufactured quickly and cost-effectively to protect and provide necessary reinforcing strength to the flat lens 110 of the sensor or detector device 100. According to embodiments of the invention, the reinforcement structure 116A may be integrally formed with the front housing 104. According to other embodiments, the reinforcement structure 116A may be an individual, separate component that may be removably attached to the inner flange 202 of the front housing 104.

FIG. 3B illustrates a perspective view of the front housing 104 having a reinforcement structure 116B, according to another embodiment of the present invention. The reinforcement structure 116B may comprise a pair of arms 306. Each of the pair of arms 306 is attached to the wall 106 of the front housing 104 at a position opposite to each other. Therefore, each arm 306 comprises a first end attached to the inner flange 202 of the front housing 104 and a second end distal to the first end and floating. With floating is meant that the second end is not attached to any part of the front housing 104 nor to the reinforcement structure 116.

A length of the arm 306 defined between the first end and the second end may preferably be smaller than a circular radius of the opening 108, hence, when the pair of arms 306 is attached to the wall 106 of the front housing 104, a gap is defined between the second ends of the pair of arms 306. According to the example given, the gap between the pair of arms 306 allows the infrared rays to pass through the flat lens 110 without any obstruction. Hence, the sensitivity of the sensor or detector device 100 is unaffected as the reinforcement structure 116B does not interfere with the central zone 208 of the flat lens 110. The pair of arms 306 of the reinforcement structure 116B may be attached to the inner flange 202 in such a way that the top edge of the pair of arms 306 abuts with the inner surface 120 of the flat lens 110. Thus, the reinforcement structure 116B prevents damage of the flat lens 110 that may be caused by an impact load of an external object. According to embodiments of the invention, the reinforcement structure 116B may integrally be formed with the front housing 104. According to other embodiments, the reinforcement structure 116B may be an individual, separate component that may be removably attached to the inner flange 202.

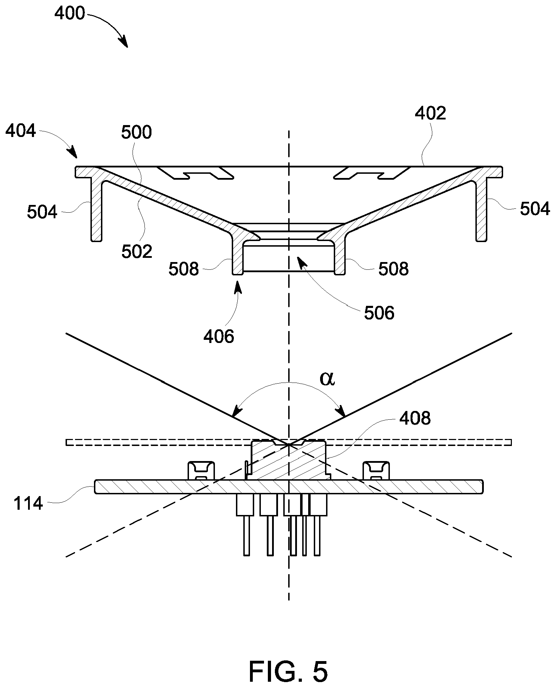

FIG. 4 illustrates an exploded view of a sensor or detector device 100 having a reinforcement structure 400 according to an example not falling under the claims. Referring to FIG. 1 and FIG. 4, the sensor or detector device 100 comprises a housing assembly 102 which further comprises a front housing 104 and a back housing 112. The front housing 104 and the back housing 112 are together adapted to receive the printed circuit board (PCB) 114 there between. The front housing 104 comprises the reinforcement structure 400 that may be removably attached to the inner periphery 118 of the wall 106 of the front housing 104. More particularly, the reinforcement structure 400 may removably be attached to the inner flange 202 of the front housing 104. The reinforcement structure 400 is provided for protecting the flat lens 110 from any damage that may be caused by an impact of an external object. The reinforcement structure 400 comprises an conically shaped body 402 which is removably attached to the wall 106 of the front housing 104. The conically shaped body 402 is removably attached to the inner flange 202 of the front housing 104. Although, the body 402 has a cone shape, it may be understood that this body 402 in general may have a shape that confines with the shape of the opening 108 in the front housing 104. The conically shaped body 402 comprises a base end 404 (shown in FIG. 5) adapted to removably be attached to the wall 106 of the front housing 104. Particularly, the base end 404 may removably be attached to the inner flange 202 of the front housing 104. The conically shaped body 402 further comprises a tapered end 406 (shown in FIG. 5) adapted to receive the passive infrared (PIR) element 408 of the PCB 114. In that way, the conically shaped body 402 has minimum impact on the sensitivity of the sensor or detector device 100. The conically shaped body 402 adds strength to the sensor or detector device 100 and shields the PCB 114 from any damage caused by the external object. According to some embodiments of the invention, the conically shaped body 402 may be made out of a transparent material. When the conically shaped body 402 of the reinforcement structure 400 is transparent, the sensitivity of the sensor or detector device 100 is unaffected while access to electric parts such as the PCB 114 may be avoided because of the reinforcement structure 400 being present. The presence of a minimum number of parts that constitute the conically shaped body 402 renders the reinforcement structure 400 less complex and thereby manufacturing of the reinforcement structure 400 becomes quick and easy. In addition, the presence of a minimum number of parts makes the assembly of the conically shaped body 402 with the front housing 104 simple and easy.

According to embodiments of the invention, the sensor or detector device 100 according to embodiments of the invention may furthermore comprise a masking cap 410 that may be removably attached to the inner flange 202 of the front housing 104 or removably fitted onto the flat lens 110. The masking cap 410 may be provided to, for particular applications, reduce the working field of the sensor or detector device. This part is not necessarily there, when it is not put onto the flat lens 110 of the sensor or detector device 100, the sensor or detector device 100 can reach its full sensing or detection range.

According to still further embodiments of the invention, the sensor or detector device 100 may still further comprise a decorative frame 412 removably attached to the wall 106 of the front housing 104. Particularly, the decorative frame 412 may be fixed to the outer flange 200 of the front housing 104. According to embodiments of the invention, the decorative frame 412 may be provided to improve aesthetic appearance of the sensor or detector device 100.

In the example illustrated in Fig. 4, both a masking cap 410 and a decorative frame 412 are provided to the sensor or detector device 100. However, it has to be understood that, according to other embodiments of the invention, only one of a masking cap 421 or a decorative frame 412 may be present or even none of these may be present.

FIG. 5 illustrates a sectional view of the reinforcement structure 400 according to the example illustrated in FIG. 4, taken along line A-A' of FIG. 4. Referring to FIG. 4, the conically shaped body 402 may comprise a base end 404 and a tapered end 406. The conically shaped body 402 may comprise an outer surface 500 and an inner surface 502. One or more connecting members 504 may be provided at the base end 404, which extend vertically downward from the inner surface 502. The connecting members 504 may be adapted to fit into slots (not shown) provided in the inner flange 202 of the front housing 104. A receiving space 506 is defined at the tapered end 406 by an extension 508 to receive the PIR element 408 of the PCB 114. According to the present embodiment, an opening defined above the receiving space 506 at the tapered end 406 of the conically shaped body 402 allows infrared rays to pass therethrough. The base end 404, the tapered end 406, and the outer surface 500 of the conically shaped body 402 together define a viewing angle 'α'. According to embodiments of the invention, the viewing angle 'α' may be 135 degrees, which is more than the theoretical viewing angle of the PIR element 408. Typically, the theoretical viewing angle of the PIR element 408 may be 127 degrees.

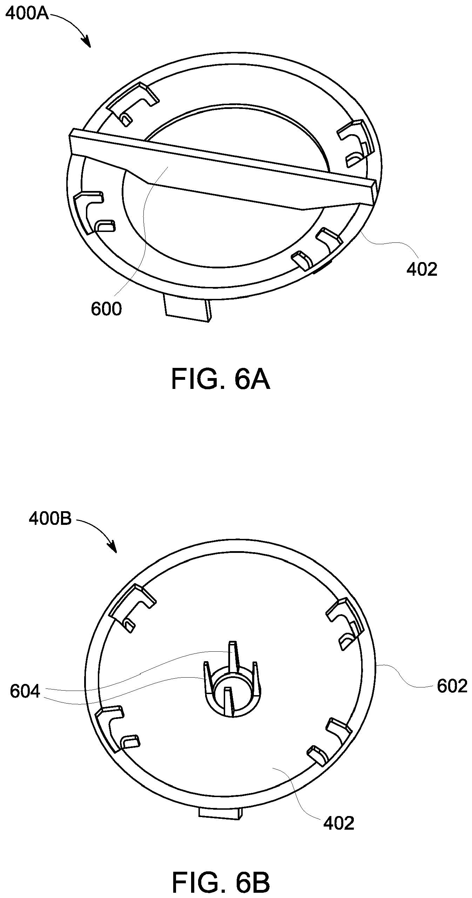

FIG. 6A illustrates a perspective view of a reinforcement structure 400A for the sensor or detector device 100 of FIG. 4, according to another example. The reinforcement structure 400A comprises a conically shaped body 402 and a bar 600 extending across an opening of the conically shaped body 402. The bar 600 is attached to a wall 602 of the conically shaped body 402A at opposite sides by means of a first end and a second end. According to the present embodiment, unlike the reinforcement structure 400 illustrated in Figs. 4 and 5, instead of a small opening at the tapered end 406, the conically shaped body 402 of the reinforcement structure 400A is wide open at its tapered end to allow the infrared rays to pass therethrough. According to embodiments of the invention, the bar 600 may integrally be formed with the conically shaped body 402 and may be made from the same transparent material of the conically shaped body 402, hence the sensitivity of the sensor or detector device 100 is unaffected.

FIG. 6B illustrates a perspective view of a reinforcement structure 400B of a sensor or detector device 100 of FIG. 4, according to another example. Referring to FIG. 4 and FIG. 5, the reinforcement structure 400B may comprise a conically shaped body having a base end and a tapered end identical to the conically shaped body 402 illustrated in Figs 4 and 5, having the base end 404 and the tapered end 406. The reinforcement structure 400B may further comprise a plurality of protrusions 604 that extends from the tapered end towards the base end of the conically shaped body. Particularly, each of the plurality of protrusions 604 adds strength to the reinforcement structure 400B to provide support to the flat lens 110 be resistant against an impact from an external object. Further, the sensitivity of the sensor or detector device 100 is unaffected as the reinforcement structure 400B does not interfere with the central zone 208 of the flat lens 110.

Various embodiments disclosed herein are to be taken in the illustrative and explanatory sense and should in no way be construed as limitations to the present invention. The present disclosure comprises various reinforcement structures 116, 116A, 116B, 400, 400A, and 400B attached to the front housing 104 of the sensor or detector device 100. The reinforcement structures 116, 116A, 116B, 400, 400A, and 400B are attached to the inner flange 202 of the front housing 104, and portion of the reinforcement structures 116, 116A, 116B, 400, 400A, and 400B abuts with the inner surface 120 of the flat lens 110 to provide support to the flat lens 110 and to protect the flat lens 110 from any damage that may be caused by an impact load of an external object. The reinforcement structures 116, 116A, 116B are, according to the claimed invention, formed integrally with the front housing 104, which make manufacturing process quick and cost-effective. Further, the reinforcement structures 116, 116A, 116B may be selected based on the type of applications of the sensor or detector device 100, where the reinforcement structure is implemented cost-effectively. Further, the reinforcement structures 116, 116A, 116B may be designed in such a way that the sensitivity of the sensor or detector device 100 is unaffected. In addition, the reinforcement structures 116, 116A, 116B may be easily retrofitted with the front housing 104 without the need of any additional components, if the reinforcement structures 116, 116A, 116B are individual components.

The reinforcement structures 400, 400A, 400B may comprise annular bodies that are made out of transparent materials to avoid loss of sensitivity of the sensor or detector devices 100, and in the meantime to protect the PCB 114 from accessing or touching from outside. Further, the cone shape structure of the annular bodies adds strength to the sensor or detector devices 100 and protect the flat lens 110 from any damage that may be caused by an impact load of an external object. As the reinforcement structures 400, 400A, 400B comprise a minimum number of parts, manufacturing of the reinforcement structures 400, 400A, 400B becomes easier and cost-effective, and assembly of the reinforcement structures 400, 400A, 400B with the front housing 104 becomes quick and easy. As such, with the various reinforcement structures 116, 116A, 116B, 400, 400A, and 400B attached to the front housing 104 of the sensor or detector devices 100, the sensor or detector devices 100 can meet the requirements of IP 54 standards and the 0.3 joule resistance test.

## Claims

1. A sensor or detector device (100) for detecting movement and/or for determining presence of one or more persons in- or outside a building, the sensor or detector device comprising a flat lens (110) and a housing assembly (102), the housing assembly (102) comprising:
- a front housing (104) comprising a wall (106) defining an opening (108), the front housing (104) being adapted for removably receiving the flat lens (110), and
- a back housing (112) removably attached to the front housing (104),
wherein the front housing (104) comprises a reinforcement structure (116, 116A, 116B, 400, 400A, 400B) for protecting the flat lens (110) from being damaged, the reinforcement structure (116, 116A, 116B, 400, 400A, 400B) being attached to an inner periphery (118) of the wall (106) of the front housing (104),
**characterized in that**
- the reinforcement structure (116, 116A, 116B, 400, 400A, 400B) and the flat lens (110) are attached to the front housing (104) such that the reinforcement structure (116, 116A, 116B, 400, 400A, 400B) abuts with the inner surface (120) of the flat lens (110), and
- the reinforcement structure (116, 116A, 116B) is formed integral with the front housing (104).

2. Sensor or detector device (100) according to claim 1, wherein the front housing (104) and the back housing (112) are, when removably attached to each other, adapted to receive a printed circuit board (114) of the sensor or detector device (100).

3. Sensor or detector device (100) according to any of the previous claims, wherein the reinforcement structure (116) comprises:
- an annular ring (204) having a diameter (dl) greater than or equal to a diameter (d2) of a central zone (208) of the flat lens (110); and
- one or more ribs (206) connecting the annular ring (204) to the wall (106) of the front housing (104).

4. Sensor or detector device (100) according to any of claims 1 to 2, wherein the reinforcement structure (116A) comprises one rib (300) extending across the opening (108) of the front housing (104), and wherein a first end (302) and a second end (304) of the rib (300) are attached to opposite sides of the wall (106) of the front housing (104).

5. Sensor or detector device (100) according to any of claims 1 to 2, wherein the reinforcement structure (116B) comprises a pair of arms (306), and each of the pair of arms (306) is attached to the wall (106) of the front housing (104) at opposite sides of the wall (106).

## Patentansprüche

1. Sensor- oder Detektorvorrichtung (100) zum Erfassen von Bewegung und/oder zum Bestimmen der Anwesenheit einer oder mehrerer Personen innerhalb oder außerhalb eines Gebäudes, die Sensor- oder Detektorvorrichtung umfassend eine flache Linse (110) und eine Gehäusebaugruppe (102), die Gehäusebaugruppe (102) umfassend:
- ein vorderes Gehäuse (104), umfassend eine Wand (106), die eine Öffnung (108) definiert, wobei das vordere Gehäuse (104) zum lösbaren Aufnehmen der flachen Linse (110) geeignet ist, und
- ein hinteres Gehäuse (112), das entfernbar an dem vorderen Gehäuse (104) befestigt ist,
wobei das vordere Gehäuse (104) eine Verstärkungsstruktur (116, 116A, 116B, 400, 400A, 400B) zum Schutz der flachen Linse (110) vor Beschädigung umfasst, wobei die Verstärkungsstruktur (116, 116A, 116B, 400, 400A, 400B) an einem Innenumfang (118) der Wand (106) des vorderen Gehäuses (104) angebracht ist,
**dadurch gekennzeichnet, dass**:
- die Verstärkungsstruktur (116, 116A, 116B, 400, 400A, 400B) und die flache Linse (110) an dem vorderen Gehäuse (104) derart angebracht sind, dass die Verstärkungsstruktur (116, 116A, 116B, 400, 400A, 400B) an der Innenfläche (120) der flachen Linse (110) anliegt, und
- die Verstärkungsstruktur (116, 116A, 116B) integral mit dem vorderen Gehäuse (104) ausgebildet ist.

2. Sensor- oder Detektorvorrichtung (100) nach Anspruch 1, wobei das vordere Gehäuse (104) und das hintere Gehäuse (112), wenn abnehmbar aneinander befestigt, zum Aufnehmen einer gedruckten Leiterplatte (114) der Sensor- oder Detektorvorrichtung (100) angepasst sind.

3. Sensor- oder Detektorvorrichtung (100) nach einem der vorhergehenden Ansprüche, wobei die Verstärkungsstruktur (116) umfasst:
- einen ringförmigen Ring (204) mit einem Durchmesser (d1), der größer oder gleich einem Durchmesser (d2) einer zentralen Zone (208) der flachen Linse (110) ist; und
- eine oder mehrere Rippen (206), die den ringförmigen Ring (204) mit der Wand (106) des vorderen Gehäuses (104) verbinden.

4. Sensor- oder Detektorvorrichtung (100) nach einem der Ansprüche 1 bis 2, wobei die Verstärkungsstruktur (116A) eine Rippe (300) umfasst, die sich über die Öffnung (108) des vorderen Gehäuses (104) erstreckt, und wobei ein erstes Ende (302) und ein zweites Ende (304) der Rippe (300) an gegenüberliegenden Seiten der Wand (106) des vorderen Gehäuses (104) angebracht sind.

5. Sensor- oder Detektorvorrichtung (100) nach einem der Ansprüche 1 bis 2, wobei die Verstärkungsstruktur (116B) ein Paar Arme (306) umfasst und jeder des Paares von Armen (306) an der Wand (106) des vorderen Gehäuses (104) an gegenüberliegenden Seiten der Wand (106) befestigt ist.

## Revendications

1. Dispositif capteur ou détecteur (100) pour détecter un mouvement et/ou pour déterminer la présence d'une ou plusieurs personnes à l'intérieur ou à l'extérieur d'un bâtiment, le dispositif capteur ou détecteur comprenant une lentille plate (110) et un ensemble boîtier (102), l'ensemble boîtier (102) comprenant :
- un boîtier avant (104) comprenant une paroi (106) définissant une ouverture (108), le boîtier avant (104) étant conçu pour recevoir de manière amovible la lentille plate (110), et
- un boîtier arrière (112) fixé de manière amovible au boîtier avant (104), dans lequel le boîtier avant (104) comprend une structure de renforcement (116, 116A, 116B, 400, 400A, 400B) pour protéger la lentille plate (110) contre l'endommagement, la structure de renforcement (116, 116A, 116B, 400, 400A, 400B) étant fixée à une périphérie interne (118) de la paroi (106) du boîtier avant (104),
**caractérisé en ce que**
- la structure de renforcement (116, 116A, 116B, 400, 400A, 400B) et la lentille plate (110) sont fixées au boîtier avant (104) de telle sorte que la structure de renforcement (116, 116A, 116B, 400, 400A, 400B) vient en butée avec la surface interne (120) de la lentille plate (110), et
- la structure de renforcement (116, 116A, 116B) est formée d'un seul tenant avec le boîtier avant (104).

2. Dispositif capteur ou détecteur (100) selon la revendication 1, dans lequel le boîtier avant (104) et le boîtier arrière (112) sont, lorsqu'ils sont fixés de manière amovible l'un à l'autre, conçus pour recevoir une carte de circuit imprimé (114) du dispositif capteur ou détecteur (100).

3. Dispositif capteur ou détecteur (100) selon l'une quelconque des revendications précédentes, dans lequel la structure de renforcement (116) comprend :
- une bague annulaire (204) ayant un diamètre (d1) supérieur ou égal à un diamètre (d2) d'une zone centrale (208) de la lentille plate (110) ; et
- une ou plusieurs nervures (206) reliant la bague annulaire (204) à la paroi (106) du boîtier avant (104).

4. Dispositif capteur ou détecteur (100) selon l'une quelconque des revendications 1 à 2, dans lequel la structure de renforcement (116A) comprend une nervure (300) s'étendant à travers l'ouverture (108) du boîtier avant (104), et dans lequel une première extrémité (302) et une seconde extrémité (304) de la nervure (300) sont fixées à des côtés opposés de la paroi (106) du boîtier avant (104).

5. Dispositif capteur ou détecteur (100) selon l'une quelconque des revendications 1 à 2, dans lequel la structure de renforcement (116B) comprend une paire de bras (306), et chacun de la paire de bras (306) est fixé à la paroi (106) du boîtier avant (104) au niveau de côtés opposés de la paroi (106).
